# EUROPEAN PATENT SPECIFICATION

(11) **EP 2 818 897 B1**
(45) Date of publication and mention of the grant of the patent: **30.09.2020**
(21) Application number: 14174600.8
(22) Date of filing: 26.06.2014
(51) Int. Cl.: G01V 1/28, G01V 1/30

(54) **METHOD AND APPARATUS FOR ESTIMATING A PARAMETER OF A SUBSURFACE VOLUME**
VERFAHREN UND VORRICHTUNG ZUR SCHÄTZUNG EINES PARAMETERS EINES UNTERIRDISCHEN VOLUMENS
PROCÉDÉ ET APPAREIL D'ESTIMATION D'UN PARAMÈTRE D'UN VOLUME SOUTERRAIN

(30) Priority: 26.06.2013 US 201313927883
(43) Date of publication of application: 31.12.2014
(73) Proprietor: Baker Hughes Holdings LLC, Houston, TX 77073 (US)
(72) Inventor: ZHANG, Xiaomei, Houston, TX 77019-2118 (US); HOLLAND, Marc, Houston, TX 77019-2118 (US); VAN DER ZEE, Wouter, Houston, TX 77019-2118 (US)
(74) Representative: BRP Renaud & Partner mbB Rechtsanwälte Patentanwälte Steuerberater

(56) References cited:
- WO-A1-2013/028237
- US-A1- 2004 008 580
- US-A1- 2011 125 476
- US-A1- 2012 318 500
- US-A1- 2013 081 805
- US-A1- 2013 144 532

## Description

### BACKGROUND

Hydraulic fracturing or stimulation of rock in earth formations is a technique used to extract hydrocarbons from reservoirs in the formations. Stimulation increases the number of fractures in the rock or opens existing fractures that in turn may increase the production rate of the hydrocarbons. In that production of hydrocarbons can be expensive, it would be well received in oil and gas industries if method and apparatus could be developed to calculate a reservoir volume stimulated by the fracturing that may be used as an input into a reservoir model to estimate the amount and production rate of hydrocarbons that may be produced. Other industries such as the geothermal industry may also benefit from this method and apparatus. The present invention is, however, applicable more generally to methods of estimating a parameter of a subsurface volume.

US 2011/0125476 discloses a plurality of subterranean formation models using a map of microseismic event locations overlaid on example fracture patterns.

### BRIEF SUMMARY

The present invention provides a method for estimating a parameter of a subsurface volume as claimed in claim 1. The present invention also provides a non-transitory computer readable medium as claimed in claim 13.

In accordance with a first aspect of the invention there is provided a method for estimating a parameter of a subsurface volume, the method comprising:
receiving a seismic signal from each event in a plurality of subsurface events, the seismic signal being received by a seismic receiver;
representing each event by a plurality of markers in a represented space, a spatial distribution of the markers representing a volume of rock in the subsurface volume influenced by an event, wherein the volume of rock and a location of each event are derived from the seismic signal;
calculating an attribute for each marker in the plurality of markers, wherein said attribute relates to the event to which the marker relates;
dividing the represented space into a plurality of cells; and
summing the attributes for the markers in each cell to provide a total attribute for each cell;
wherein each of the representing, the calculating, the dividing and the summing is performed using one or more processors.

The method may further comprise dividing the total attribute for each cell by the volume of that cell to provide a cell attribute density.

Alternatively or additionally the method may further comprise representing a location error corresponding to the location of each event by increasing the spatial distribution of the markers, the increase in spatial distribution being representative of the location error;
assigning a weight to each marker in the plurality of markers based on a probability function for the location error, the probability function providing a probability of the marker being at the actual location of the event;
calculating a weighted attribute using the probability function; and
summing the weighted attributes for all the markers in each cell to provide a total weighted attribute for each cell.

The method may then further comprise dividing the total weighted attribute for each cell by the volume of that cell to provide a cell weighted scalar attribute density. Calculating the weighted attribute may comprise multiplying the assigned weight times the corresponding attribute. The probability function may be a statistical distribution. The statistical distribution may be a Gaussian distribution. The location error may be a number of standard deviations of the probability function.

In accordance with any of the embodiments of the invention the markers may be represented virtually by the one or more processor.

The attribute may be a scalar moment or a rupture area.

The derived location of each event may be within an outer boundary formed by the spatial distribution of the markers corresponding to each event.

The spatial distribution may be spherical.

The spatial distribution may conform to a fracture plane orientation as derived from the seismic signal.

The markers may be evenly distributed in the spatial distribution.

The volume of rock may be represented by a source radius.

The method may further comprise stimulating the earth formation using a stimulation apparatus configured to generate a plurality of events in the formation. This may be carried out prior to the step of receiving the seismic signal from each event in a plurality of subsurface events.

The method may further comprise:
representing a location error corresponding to a location of each event by increasing the spatial distribution of the markers, the increase in spatial distribution being representative of the location error;
assigning a weight to each marker in the plurality of markers based on a probability function for the location error, the probability function providing a probability of the marker being at the actual location of the event;
calculating a weighted attribute using the probability function; and
summing the weighted attributes for all the markers in each cell to provide a total weighted attribute for each cell.

In accordance with a further aspect the present invention provides a non-transitory computer readable medium comprising computer executable instructions for estimating a parameter of a subsurface volume that when executed by a computer implements a method comprising:
receiving a recorded seismic signal from each event in a plurality of subsurface events, where the seismic signal has been received by a seismic receiver;
representing each event by a plurality of markers in a represented space, a spatial distribution of the markers representing a volume of rock in the subsurface volume influenced by a microseismic event, wherein the volume of rock and a location of each event are derived from the seismic signal;
calculating an attribute for each marker in the plurality of markers, wherein said attribute relates to the event to which the marker relates;
dividing the represented space into a plurality of cells; and
summing the attributes for all the markers in each cell to provide a total attribute for each cell.

In accordance with this further aspect the method may further comprise:
representing a location error corresponding to the location of each event by increasing the spatial distribution of the markers, the increase in spatial distribution being representative of the location error;
assigning a weight to each marker in the plurality of markers based on a probability function for the location error, the probability function providing a probability of the marker being at the actual location of the event;
calculating a weighted attribute using the probability function; and
summing the weighted attributes for all the markers in each cell to provide a total weighted attribute for each cell.

The aspects of the invention, in any of their embodiments, may comprise any one or ones of the following features. The parameter may be a volume of a reservoir. The reservoir may be a stimulated reservoir. The represented space may be a three-dimensional space. The plurality of cells may comprise or be a plurality of three-dimensional grid cells. The attribute for each marker may be a scalar attribute. Each event in the plurality of subsurface events may be a micoseismic event. The micoseismic event may be an event in an earth formation. The seismic receiver may comprise or be an array of seismic receivers. The presenting, calculating, dividing and summing may be performed using the same processor. The or a set of one or more processors may, in embodiments, assign a weight to each marker based on a probability function for the location error. The receiving may also be carried out by the or a set of one or more processors.

The method may further comprise stimulating the earth formation using a stimulation apparatus configured to generate a plurality of events in the formation. The method may further comprise, prior to receiving a seismic signal from each microseismic event in an earth formation, stimulating the earth formation using a stimulation apparatus configured to generate a plurality of events in the formation.

Advantageously, in accordance with any of its aspects or embodiments in which a volume of a stimulated reservoir is estimated, the estimated volume of the stimulated reservoir may be input into a reservoir model, e.g. to estimate an amount and/or production rate of hydrocarbons that may be produced.

### BRIEF DESCRIPTION OF THE DRAWINGS

The following descriptions should not be considered limiting in any way. With reference to the accompanying drawings, like elements are numbered alike:
FIG. 1 illustrates a cross-sectional view of an exemplary embodiment of an earth formation instrumented to receive seismic event data;
FIG. 2 is a flow chart for a method for calculating a stimulated reservoir volume of an earth formation;
FIGS. 3A-3D, collectively referred to as FIG. 3, depict aspects of scalar moment mapping in three-dimensions; and
FIG. 4 depicts aspects of a three-dimensional plot illustrating spreading of recorded seismic events by considering source radius and location error for each event.

### DETAILED DESCRIPTION

A detailed description of one or more embodiments of the disclosed apparatus and method presented herein by way of exemplification and not limitation with reference to the figures.

Disclosed are method and apparatus for calculating a volume of a stimulated rock in an earth formation. From the stimulated rock volume, a stimulated reservoir volume can be determined. The term "stimulated reservoir volume" relates to a volume in an earth formation reservoir that is effectively stimulated, in which the permeability is increased to allow a sufficient portion of the hydrocarbons to be extracted, thereby increasing the performance (e.g., flow rate) of a well. The stimulated reservoir volume is thus a measure of the efficacy of a stimulus treatment applied to the formation such as fracturing. While the exemplary embodiments of the invention described relate to estimating a volume of a stimulated reservoir, the invention is more generally applicable to estimating a parameter of a subsurface formation.

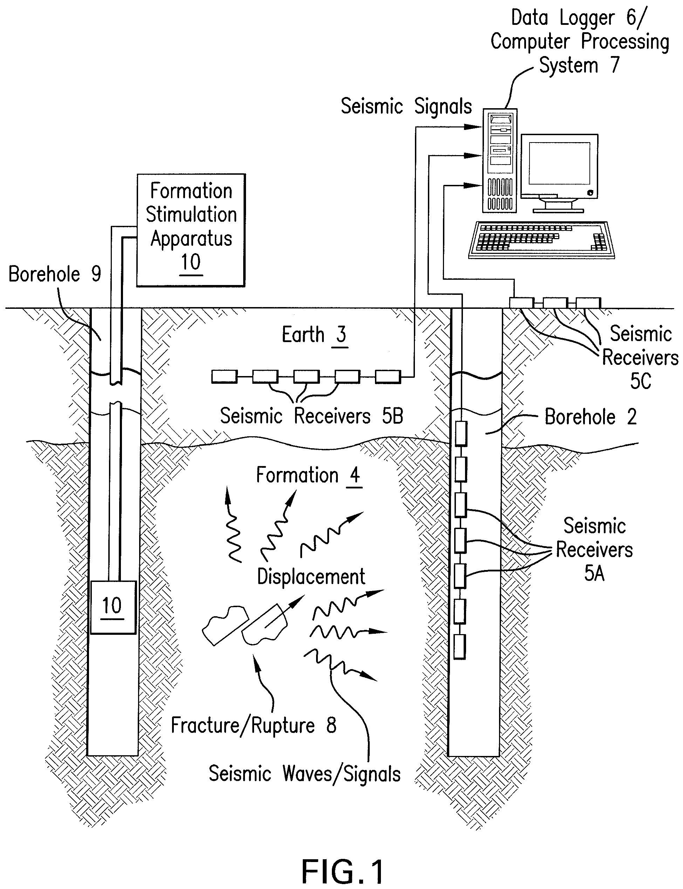

FIG. 1 illustrates a cross-sectional view of an exemplary embodiment of a borehole 2 penetrating the earth 3 having a formation 4. A plurality of seismic transducers or receivers 5 is configured to receive seismic signals and convert them to electrical or optical signals for transmission and/or recording. In the art, seismic receivers may also be referred to as geophones. A plurality of seismic receivers 5A is disposed in the borehole 2. A plurality of seismic receivers 5B is buried shallow in the earth 3 while a plurality of seismic receivers 5C is disposed at the surface of the earth 3. The seismic receivers 5A, B and C are coupled to a data logger 6 that is configured to record a signal magnitude as a function of time for each of the seismic receivers. Functions of the data logger 6 may be performed by a computer processing system 7, which in addition to logging data may process seismic receiver data in accordance with the disclosure herein. It can be appreciated that a microseismic monitoring network can include configurations and combinations of seismic receivers that may differ from the network of receivers illustrated in FIG. 1.

Still referring to FIG. 1, another borehole, a borehole 9, also penetrates the earth 3 and formation 4. A formation stimulus apparatus 10 is disposed in the borehole 9 and configured to stimulate rock in formation 4 such as by fracturing the rock and/or further opening existing fractures. Non-limiting embodiments of the formation stimulus apparatus are a hydraulic fracturing apparatus and a water injection apparatus.

A location of each or the seismic receivers 5A, B and C is known and together form an array of seismic receivers. When a rupture occurs (i.e. microseismic event) such as at 8 in FIG. 1, a seismic signal or wave is generated and travels in all directions through the formation 4 and/or earth 3 and is received by the array. Because the signal magnitude as a function of time is recorded at each seismic receiver, the signal shape and time of receipt of each signal relative to the other received signals are also known. From this information, metrics characterizing each microseismic event can be determined using known inversion techniques. Inversion relates to mathematical processing that can calculate the metrics of a cause for a resulting event that is measured. In case of the presence of three-directional-component receivers, the directional information of the signal can be derived as well. These techniques may be implemented by the computer processing system 7. In one example, the location of the rupture that would generate the received seismic signal is calculated using inversion techniques.

A seismic event occurs on a rupture or fracture plane, which has an associated area. The relative displacement of this area between two sides of the rupture plane in non-zero. When a rupture occurs, seismic waves are radiated from the rupture through the formation and earth.

The rupture process is encoded in the characteristics of the radiated seismic waves. By studying the characteristics of the seismic waves received by the receiver network, the location, magnitude, scalar moment and other seismic characteristics can be obtained. In one or more embodiments, the scalar moment, as defined below, of a microseismic event is derived from the wave magnitude and the wave amplitude spectrum. Other techniques and recorded signals as known in the art may also be used to determine the scalar moment. Further information about each microseismic event may also be obtained from the radiated seismic waves using certain types of receivers, receiver arrays and processing. This further information includes fracture plane size (e.g., area) and orientation along with the fracture displacement. This further information and the scalar moment together may be referred to as the moment tensor. In one or more embodiments, the moment tensor may be represented in three-dimensions by a 3 by 3 matrix. Hence, some seismic data available for processing using the methods disclosed herein may include only location and magnitude or scalar moment while other data may include the moment tensor.

Some of the methods for decoding the radiated seismic waves are based measuring a P-wave and an S-wave of the total seismic wave. For the P-wave, the particles in the solid have vibrations along or parallel to the travel direction of the wave energy. The P-wave has higher speed than the corresponding S-wave in the same medium. Noting that it takes a longer time for a seismic signal to reach a receiver that is farther away from a seismic event than a receiver that is closer, the event location can be derived from the arrival time difference of the received P and/or S signals from all receivers or the separation measured between the recorded P-wave and S-wave for the same receiver. Furthermore, the vibration direction will indicate the direction of wave propagation and, therefore, provide information to determine the source location as well. The rupture magnitude or moment magnitude can be derived from the signal amplitude and its travel distance from the source. Additional information may be derived from a Fourier transform of the received seismic signal. In one example, the corner frequency where the slope of the Fourier transform changes suddenly is used to determine the rupture length and source radius, which is an estimate of the fracture size. Information on the size of the rupture plane can be obtained in many ways. The most common ways are either derived from the corner frequency of a waveform amplitude spectrum analysis, or when this is missing, an approximate power law empirical relationship between magnitude and the rupture plane size. As the techniques for analyzing seismic waves to determine fracture metrics, such as fracture location, fracture area, fracture displacement, and fracture plane orientation, using an array of seismic receivers is well known in the art, these techniques are not discussed in further detail.

A plurality of ruptures may be caused in the formation by stimulation such as by hydraulic fracturing or water injection as non-limiting embodiments. Generally, each rupture in the plurality of ruptures occurs at different times. Hence, the location, size and/or orientation of each fracture plane that has ruptured can be determined by the techniques discussed above. All of the ruptured planes together indicate a stimulated rock volume.

The location error may be defined by the receiver array geometry, the sample rate and which the microseismic events are recorded, and the uncertainty of the velocity model used to calculate the location of each received event using the received seismic signals from each event. Other factors may also contribute to the location error. In one or more embodiments when a detailed error function is not provided, these errors may be considered random in nature and, thus, may be modeled using a probability function such as the Gaussian distribution.

As disclosed herein, the scalar moment, M₀ = µAD (where µ is shear modulus, D is average displacement of the rupture, and A is the area of the rupture), is used to describe seismic deformation in a rock volume due to rupture of formation rock. The deformed volume caused by a seismic event (i.e., fracture or rupture) with a scalar moment M₀ is ΔV = AD and can also be used to describe the stimulated rock volume. The scalar seismic moment is one measure of the microseismic event size and energy released. Alternatively, other microseismic attributes, such as rupture area or seismic energy released, may also be used.

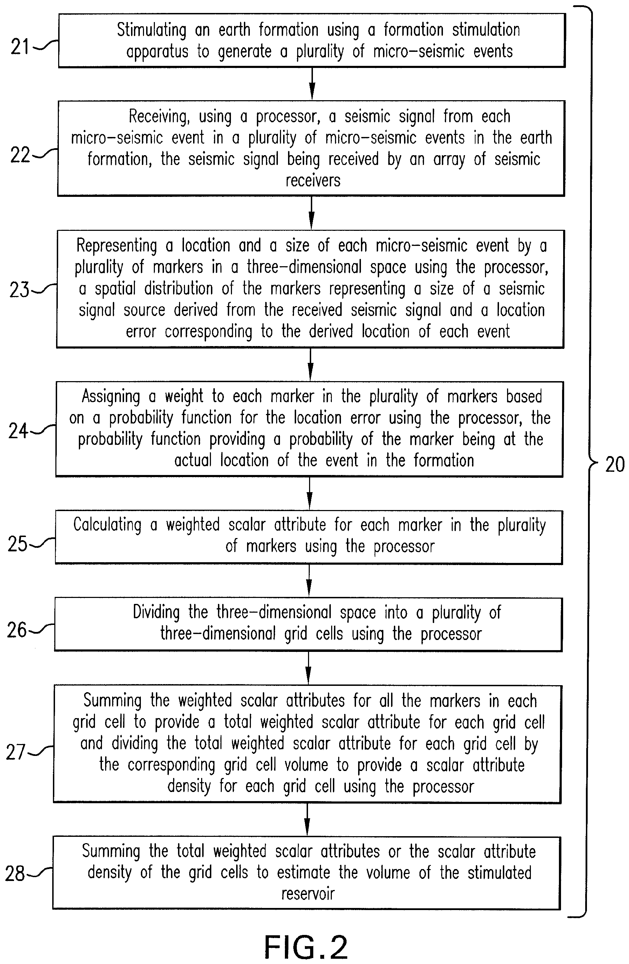

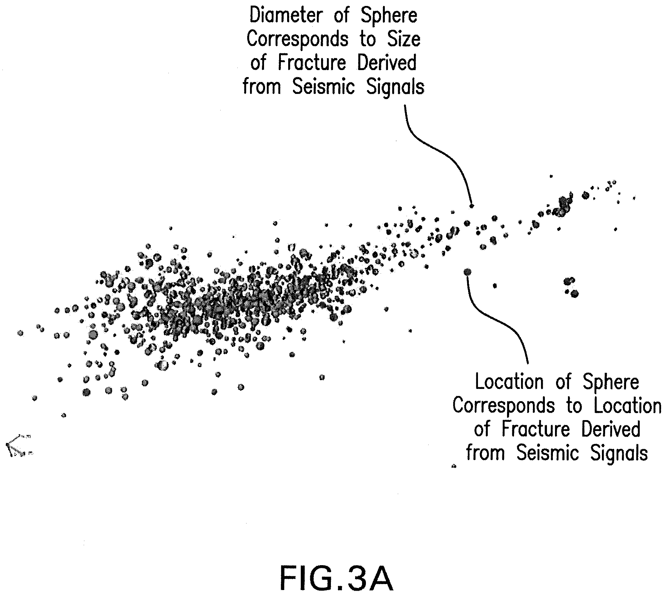

FIG. 2 is a flow chart for a method 20 for calculating a stimulated reservoir volume of an earth formation. Block 21 calls for stimulating the earth formation using a formation stimulation apparatus to generate a plurality of microseismic events. Block 22 calls for receiving a seismic signal from each microseismic event in the plurality using an array of seismic receivers using a processor. Block 23 calls for representing each microseismic event by a plurality of markers such as dots in the three-dimensional space. If no rupture plane orientation is known, then the rupture area can be represented by a sphere around the microseismic event location with a radius equal to calculated rupture area radius. This radius may be referred to as the source radius. In one or more embodiments, the markers are evenly distributed or nearly evenly distributed (e.g., less than 5% variance in distance between adjacent markers). The plurality of markers or cloud of markers is spread around the location determined from the seismic signal corresponding to the event at that location. The location is either surrounded by or in the cloud. The spatial spreads of the markers is related to the rupture size of each event. In one or more embodiments, the distance between the markers is the minimum source radius of all the microseismic events although other distances can also be used. In one or more embodiments, the distance between markers can be one-third the distance of a length of grid cell, which is discussed below. Block 23 may also include representing a location and attribute of each microseismic event in three-dimensional space where the location and attribute are derived from the seismic signal. The attribute may be the magnitude of the signal, the source radius, or the scalar moment as non-limiting embodiments. This three-dimensional representation is illustrated in FIG. 3A where the size of each sphere representing a microseismic event is related to the attribute such that larger spheres represent larger attributes.

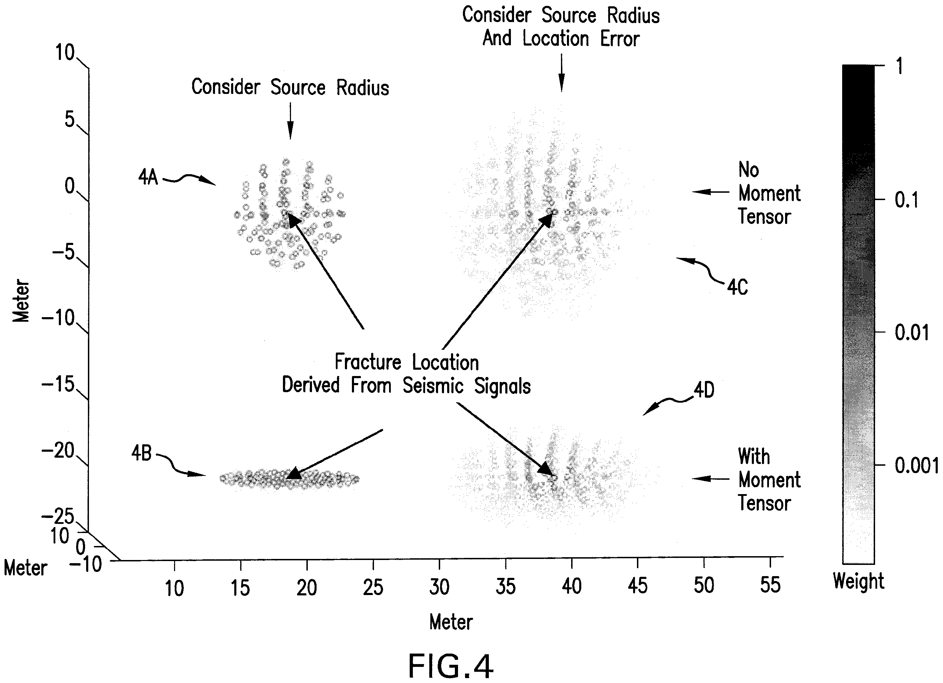

Aspects of block 23 are now discussed in further detail with respect to FIG. 4. As illustrated at 4A, when no fault plane solution or moment tensor is provided, the spheres are spread by markers spherically in three-dimensional space. When a fault plane solution or moment tensor is available, the markers are positioned on the fault plane according to its source radius as illustrated at 4B.

Another factor, that influences the spatial spread of the detected microseismic events is location error associated with the location calculated for each microseismic event that is detected. To account for the location error, the spatial spread of the markers are modified (e.g., increased) to include the uncertainty range due to the location error. For example, a cloud associated with an event having a higher level of location error will have a cloud with a greater diameter than a cloud associated with an event having a lower level of location error. The cloud of markers at 4A in FIG. 4 is shown at 4C with an expansion of the cloud taking into account an amount of error associated with the determined location of the event. Hence, a diameter of the cloud at 4C takes into account the source radius of the microseismic event and the location error. In one or more embodiments, the increase in the spatial distribution of the markers to account for location error is accomplished by increasing the number of markers using the same spacing distance between markers. Alternatively or in combination, the increase in the spatial distribution is accomplished by increasing the distance of each marker from the derived location according to a selected location error percentage, such as a percentage of the distance from the marker to the derived location, or by increasing the distance between markers. The selected location error percentage may be determined by such factors as rated seismic receiver accuracy, rated data logger accuracy, survey or placement accuracy of each of the seismic receivers, and geometry of the array of seismic receivers.

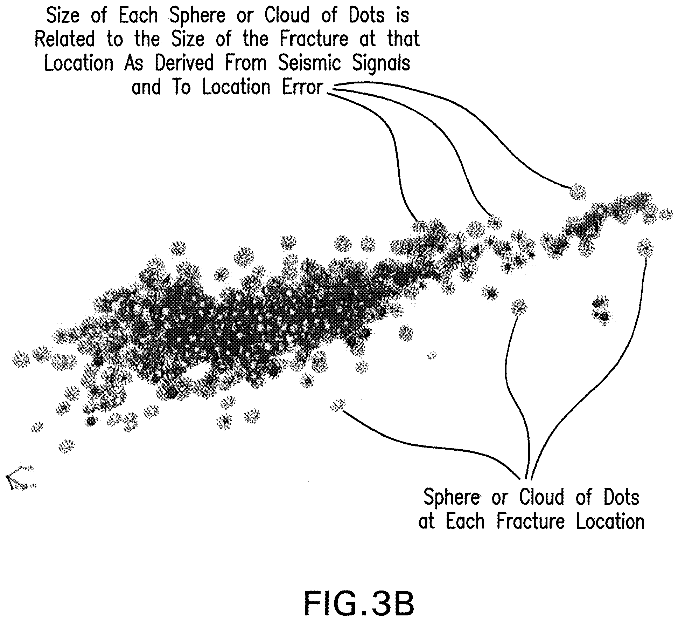

A weight is assigned to each marker with each weight being defined by the probability function. In FIG. 4, the Gaussian distribution within one standard deviation is used as the probability function for distributing the weight. Using this probability function, markers at or near the center of the cloud have higher weights than those markers at or near the edge of the cloud. In one or more embodiments, the sum of the weights of all the markers for one event equals one. When the moment tensor of a microseismic event is known as illustrated by the cloud of markers in a plane at 4B, then this cloud can also be modified as illustrated at 4D to account for location error. The resultant cloud of markers at 4D is shaped similar to an ellipsoid. FIG. 3B illustrates a cloud of markers for each of the microseismic events shown in FIG. 3A.

Referring back to FIG. 2, block 24 calls for assigning a weight to each marker in the plurality of markers based on a probability function for the location error using the processor. The probability function provides a probability of the marker being at the actual location of the event in the formation.

Referring back to FIG. 2, block 25 calls for calculating a weighted scalar attribute, such as a weighted scalar moment, for each marker in each cloud of markers corresponding to each microseismic event. The weighted scalar attribute is calculated by multiplying the assigned weight by the scalar attribute for the event. In one or more embodiments, the sum of the weighted scalar attributes for all markers for one event equals the scalar attribute derived from the seismic signal for that event.

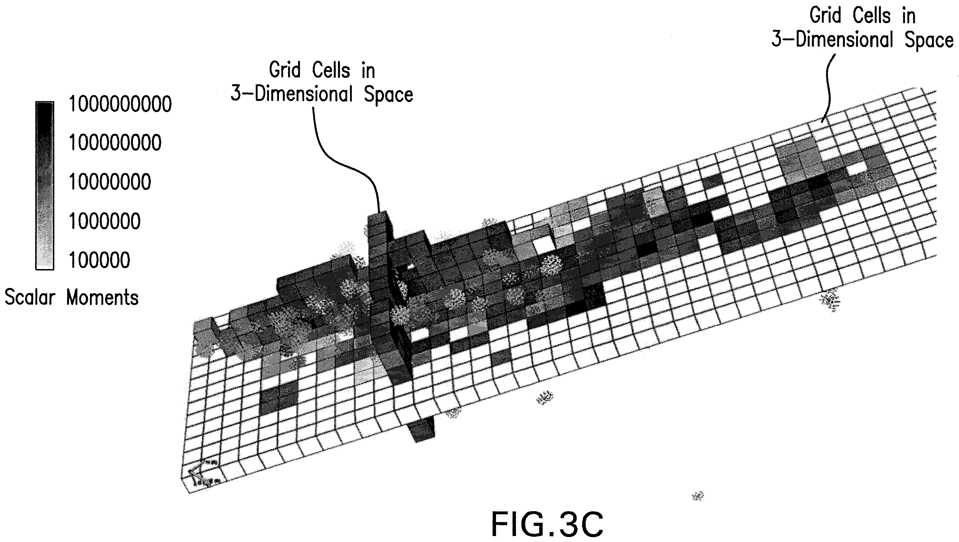

Block 26 calls for dividing the three-dimensional space into a plurality of three-dimensional grid cells. It can be appreciated that there may be a tension in determining a size of the grid cells. If the grid cells are made too big, then the accuracy of the calculation of the stimulated reservoir volume may be decreased. If the grid cells are made too small, then there may be many grid cells with no markers inside of them. In one or more embodiments, a length of a side of a grid cell is an average of distances between nearest adjacent microseismic event locations. Alternatively, in one or more other embodiments, a length of a side of a grid cell is a minimum of the distances between adjacent microseismic event locations. Alternatively, in one or more other embodiments, a length of a side of a grid cell can be user defined. It can be appreciated that each grid cell may have the same dimensions as the other grid cells in the plurality of grid cells, although they can also have different dimensions. In one or more embodiments, the grid cells in the plurality are identical cubes. One example of the plurality of grid cells is illustrated in FIG. 3C.

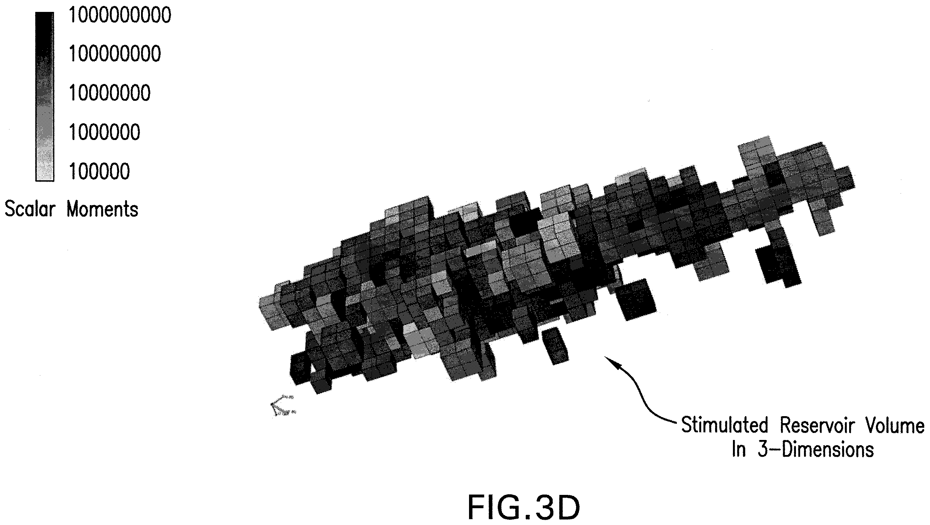

Block 27 calls for summing all the weighted scalar attributes, such as the weighted scalar moments. This is based on the weighted markers in each grid cell to provide a total scalar attribute for each grid cell. The total scalar attribute for each grid cell is then divided by the grid cell volume to provide a grid cell scalar attribute density. The grid cell scalar attribute density is then mapped into the grid cells where the magnitude of the grid cell scalar attribute density is represented by shading as illustrated in FIG. 3C. FIG. 3D illustrates grid cells having a non-zero scalar attribute density while removing those grid cell not having (or having zero) scalar attribute density.

Block 28 calls for combining the grid cells with scalar attributes or scalar attribute densities higher than zero to provide the stimulated reservoir volume. The scalar attribute or scalar attribute density of each grid cell provides a measure of the efficacy of stimulation for the corresponding grid cell. The permeability for each grid cell in the stimulated reservoir volume could be made proportional to the scalar attribute density to provide a stimulated reservoir volume with spatial variations based on the microseismic event data.

It can be appreciated that the plurality of markers may be represented "virtually" as calculation points by a computer processing system without being plotted or they may be plotted in a three-dimensional diagram, which may be displayed to a user.

The above techniques provide several advantages. One advantage is that location error for locations of microseismic events derived from seismic signals is accounted for to provide a more accurate estimate of the stimulated reservoir volume. Another advantage is that the stimulated reservoir volume is not limited to any one type of scalar attribute and may be derived from any scalar attribute for which data may be available.

In support of the teachings herein, various analysis components may be used, including a digital and/or an analog system. For example, the data logger 6, the computer processing system 7, the seismic receivers 5, or the stimulation apparatus 10 may include digital and/or analog systems. The system may have components such as a processor, storage media, memory, input, output, communications link (wired, wireless, pulsed mud, optical or other), user interfaces, software programs, signal processors (digital or analog) and other such components (such as resistors, capacitors, inductors and others) to provide for operation and analyses of the apparatus and methods disclosed herein in any of several manners well-appreciated in the art. It is considered that these teachings may be, but need not be, implemented in conjunction with a set of computer executable instructions stored on a non-transitory computer readable medium, including memory (ROMs, RAMs), optical (CD-ROMs), or magnetic (disks, hard drives), or any other type that when executed causes a computer to implement the method of the present invention. These instructions may provide for equipment operation, control, data collection and analysis and other functions deemed relevant by a system designer, owner, user or other such personnel, in addition to the functions described in this disclosure.

Elements of the embodiments have been introduced with either the articles "a" or "an." The articles are intended to mean that there are one or more of the elements. The terms "including" and "having" are intended to be inclusive such that there may be additional elements other than the elements listed. The conjunction "or" when used with a list of at least two terms is intended to mean any term or combination of terms. The terms "first," "second" and the like do not denote a particular order, but are used to distinguish different elements.

It is to be understood that the present invention has been described by way of illustrations and not limitation.

It is intended that the invention not be limited to the particular embodiment disclosed as the best mode contemplated for carrying out this invention, but that the invention will include all embodiments falling within the scope of the appended claims.

## Claims

1. A method (20) for estimating a parameter of a subsurface volume, the method comprising:
receiving a seismic signal from each event in a plurality of subsurface events, the seismic signal being received by a seismic receiver (5);
**characterized in that** the method further comprises:
representing each event by a plurality of markers in a represented space, a spatial distribution of the markers representing a volume of rock in the subsurface volume influenced by an event, wherein the volume of rock and a location of each event are derived from the seismic signal;
calculating an attribute for each marker in the plurality of markers, wherein said attribute relates to the event to which the marker relates;
dividing the represented space into a plurality of cells; and
summing the attributes for the markers in each cell to provide a total attribute for each cell;
wherein each of the representing, the calculating, the dividing and the summing is performed using one or more processors.

2. The method (20) according to claim 1, further comprising dividing the total attribute for each cell by the volume of that cell to provide a cell attribute density.

3. The method (20) according to claim 1 or 2, further comprising:
representing a location error corresponding to the location of each event by increasing the spatial distribution of the markers, the increase in spatial distribution being representative of the location error;
assigning a weight to each marker in the plurality of markers based on a probability function for the location error, the probability function providing a probability of the marker being at the actual location of the event;
calculating a weighted attribute using the probability function; and
summing the weighted attributes for all the markers in each cell to provide a total weighted attribute for each cell.

4. The method (20) according to claim 3, further comprising dividing the total weighted attribute for each cell by the volume of that cell to provide a cell weighted scalar attribute density; and/or wherein calculating the weighted attribute comprises multiplying the assigned weight times the corresponding attribute.

5. The method (20) according to claim 3 or 4, wherein the probability function is a statistical distribution, optionally wherein the statistical distribution is a Gaussian distribution;
and/or wherein the location error is a number of standard deviations of the probability function.

6. The method (20) according to any preceding claim, wherein the markers are represented virtually by the processor.

7. The method (20) according to any preceding claim, wherein the attribute is a scalar moment or a rupture area.

8. The method (20) according to any preceding claim, wherein the derived location of each event is within an outer boundary formed by the spatial distribution of the markers corresponding to each event.

9. The method (20) according to any preceding claim, wherein the spatial distribution is spherical when no fault plane solution or moment tensor is provided; or wherein the markers are positioned on the fault plane according to its source radius when a fault plane solution or moment tensor is available.

10. The method (20) according to any preceding claim, wherein markers are evenly distributed in the spatial distribution.

11. The method (20) according to any preceding claim, wherein the volume of rock is represented by a source radius.

12. The method (20) of any preceding claim further comprising:
stimulating an earth formation using a stimulation apparatus configured to generate a plurality of events in the formation.

13. A non-transitory computer readable medium comprising computer executable instructions for estimating a parameter of a subsurface volume that when executed by a computer implements a method (20) comprising:
receiving a recorded seismic signal from each event in a plurality of subsurface events, where the seismic signal has been received by a seismic receiver (5);
**characterized in that** the method further comprises :
representing each event by a plurality of markers in a represented space, a spatial distribution of the markers representing a volume of rock in the subsurface influenced by a microseismic event, wherein the volume of rock and a location of each event are derived from the seismic signal;
calculating an attribute for each marker in the plurality of markers, wherein said attribute relates to the event to which the marker relates;
dividing the represented space into a plurality of cells; and
summing the attributes for all the markers in each cell to provide a total attribute for each cell.

14. The non-transitory computer readable medium according to claim 13, the method (20) further comprising:
representing a location error corresponding to the location of each event by increasing the spatial distribution of the markers, the increase in spatial distribution being representative of the location error;
assigning a weight to each marker in the plurality of markers based on a probability function for the location error, the probability function providing a probability of the marker being at the actual location of the event;
calculating a weighted attribute using the probability function; and
summing the weighted attributes for all the markers in each cell to provide a total weighted attribute for each cell.

15. The method (20) according to any one of claims 1-12, wherein the parameter is a volume of a reservoir, optionally wherein the reservoir is a stimulated reservoir; and/or wherein each event in the plurality of subsurface events is a microseismic event.

## Patentansprüche

1. Verfahren (20) zur Schätzung eines Parameters eines unterirdischen Volumens, wobei das Verfahren umfasst:
Empfangen eines seismischen Signals von jedem Ereignis einer Vielzahl von unterirdischen Ereignissen, wobei das seismische Signal mittels eines seismischen Empfängers (5) empfangen wird;
**dadurch gekennzeichnet, dass** das Verfahren ferner umfasst:
Darstellen jedes Ereignisses durch eine Vielzahl von Markierungen in einem dargestellten Raum, wobei eine räumliche Verteilung der Markierungen einen Gesteinskörper in dem durch ein Ereignis beeinflussten unterirdischen Volumen darstellt, wobei der Gesteinskörper und ein Ort jedes Ereignisses aus dem seismischen Signal abgeleitet werden;
Berechnen eines Attributs für jede Markierung der Vielzahl von Markierungen, wobei das Attribut sich auf das Ereignis bezieht, mit dem die Markierung verknüpft ist;
Unterteilen des dargestellten Raums in eine Vielzahl von Zellen und
Aufsummieren der Attribute für die Markierungen in jeder Zelle, um für jede Zelle ein Gesamtattribut bereitzustellen;
wobei jedes von dem Darstellen, Berechnen, Unterteilen und Aufsummieren unter Verwendung eines oder mehrerer Prozessoren durchgeführt wird.

2. Verfahren (20) nach Anspruch 1, ferner umfassend: Dividieren des Gesamtattributs für jede Zelle durch das Volumen dieser Zelle, um eine Zellenattributdichte bereitzustellen.

3. Verfahren (20) nach Anspruch 1 oder 2, ferner umfassend:
Darstellen eines Ortungsfehlers entsprechend dem Ort jedes Ereignisses durch Zunahme der räumlichen Verteilung der Markierungen, wobei die Zunahme der räumlichen Verteilung für den Ortungsfehler repräsentativ ist;
Zuordnen einer Gewichtung zu jeder Markierung der Vielzahl von Markierungen auf der Grundlage einer Wahrscheinlichkeitsfunktion für den Ortungsfehler, wobei die Wahrscheinlichkeitsfunktion die Wahrscheinlichkeit angibt, dass sich die Markierung am tatsächlichen Ort des Ereignisses befindet;
Berechnen eines gewichteten Attributs unter Verwendung der Wahrscheinlichkeitsfunktion und
Aufsummieren der gewichteten Attribute für alle Markierungen in jeder Zelle, sodass für jede Zelle ein gewichtetes Gesamtattribut bereitgestellt wird.

4. Verfahren (20) nach Anspruch 3, ferner umfassend: Dividieren des gewichteten Gesamtattributs für jede Zelle durch das Volumen dieser Zelle, um eine gewichtete skalare Zellenattributdichte bereitzustellen; und/oder wobei das Berechnen des gewichteten Attributs ein Multiplizieren der zugeordneten Gewichtung mit dem entsprechenden Attribut umfasst.

5. Verfahren (20) nach Anspruch 3 oder 4, wobei die Wahrscheinlichkeitsfunktion eine statistische Verteilung ist, optional wobei die statistische Verteilung eine Gaußsche Verteilung ist;
und/oder wobei der Ortungsfehler eine Anzahl von Standardabweichungen der Wahrscheinlichkeitsfunktion ist.

6. Verfahren (20) nach einem der vorstehenden Ansprüche, wobei die Markierungen durch den Prozessor virtuell dargestellt werden.

7. Verfahren (20) nach einem der vorstehenden Ansprüche, wobei das Attribut ein skalares Moment oder ein Bruchbereich ist.

8. Verfahren (20) nach einem der vorstehenden Ansprüche, wobei der abgeleitete Ort jedes Ereignisses innerhalb einer äußeren Begrenzung liegt, die durch die räumliche Verteilung der jedem Ereignis entsprechenden Markierungen gebildet wird.

9. Verfahren (20) nach einem der vorstehenden Ansprüche, wobei die räumliche Verteilung sphärisch ist, wenn keine Störungsflächenlösung und auch kein Momententensor verfügbar ist; oder wobei die Markierungen auf der Störungsfläche entsprechend ihrem Quellenradius positioniert werden, wenn eine Störungsflächenlösung oder ein Momententensor verfügbar ist.

10. Verfahren (20) nach einem der vorstehenden Ansprüche, wobei Markierungen in der räumlichen Verteilung gleichverteilt sind.

11. Verfahren (20) nach einem der vorstehenden Ansprüche, wobei der Gesteinskörper durch einen Quellenradius dargestellt wird.

12. Verfahren (20) nach einem der vorstehenden Ansprüche, ferner umfassend:
Stimulieren einer Erdformation unter Verwendung einer Stimulationsvorrichtung, die dafür ausgelegt ist, in der Formation eine Vielzahl von Ereignissen hervorzurufen.

13. Nich-transitorisches computerlesbares Medium, das computerausführbare Anweisungen zum Schätzen eines Parameters eines unterirdischen Volumens umfasst und das, wenn es von einem Computer ausgeführt wird, ein Verfahren (20) implementiert, umfassend:
Empfangen eines aufgezeichneten seismischen Signals von jedem Ereignis einer Vielzahl von unterirdischen Ereignissen, wobei das seismische Signal mittels eines seismischen Empfängers (5) empfangen worden ist;
**dadurch gekennzeichnet, dass** das Verfahren ferner umfasst:
Darstellen jedes Ereignisses durch eine Vielzahl von Markierungen in einem dargestellten Raum, wobei die räumliche Verteilung der Markierungen einen Gesteinskörper in dem durch ein mikroseismisches Ereignis beeinflussten Untergrund darstellt, wobei der Gesteinskörper und ein Ort jedes Ereignisses aus dem seismischen Signal abgeleitet werden;
Berechnen eines Attributs für jede Markierung der Vielzahl von Markierungen, wobei das Attribut sich auf das Ereignis bezieht, mit dem die Markierung verknüpft ist;
Unterteilen des dargestellten Raums in eine Vielzahl von Zellen und
Aufsummieren der Attribute für alle Markierungen in jeder Zelle, sodass für jede Zelle ein Gesamtattribut bereitgestellt wird.

14. Nicht-transitorisches computerlesbares Medium nach Anspruch 13, wobei das Verfahren (20) ferner umfasst:
Darstellen eines Ortungsfehlers entsprechend dem Ort jedes Ereignisses durch Zunahme der räumlichen Verteilung der Markierungen, wobei die Zunahme der räumlichen Verteilung für den Ortungsfehler repräsentativ ist;
Zuordnen einer Gewichtung zu jeder Markierung der Vielzahl von Markierungen auf der Grundlage einer Wahrscheinlichkeitsfunktion für den Ortungsfehler, wobei die Wahrscheinlichkeitsfunktion die Wahrscheinlichkeit angibt, dass sich die Markierung am tatsächlichen Ort des Ereignisses befindet;
Berechnen eines gewichteten Attributs unter Verwendung der Wahrscheinlichkeitsfunktion und
Aufsummieren der gewichteten Attribute für alle Markierungen in jeder Zelle, sodass für jede Zelle ein gewichtetes Gesamtattribut bereitgestellt wird.

15. Verfahren (20) nach einem der Ansprüche 1 bis 12, wobei der Parameter ein Volumen einer Lagerstätte ist, optional wobei die Lagerstätte eine stimulierte Lagerstätte ist; und/oder wobei jedes Ereignis der Vielzahl von unterirdischen Ereignissen ein mikroseismisches Ereignis ist.

## Revendications

1. Procédé (20) d'estimation d'un paramètre d'un volume souterrain, le procédé comprenant :
la réception d'un signal sismique de chaque événement dans une pluralité d'événements souterrains, le signal sismique étant reçu par un récepteur sismique (5) ;
**caractérisé en ce que** le procédé comprend en outre :
la représentation de chaque événement par une pluralité de marqueurs dans un espace représenté, une distribution spatiale des marqueurs représentant un volume de roche dans le volume souterrain influencé par un événement, où le volume de roche et un emplacement de chaque événement sont dérivés du signal sismique ;
le calcul d'un attribut pour chaque marqueur dans la pluralité de marqueurs, où ledit attribut concerne l'événement auquel le marqueur se rapporte ;
la division de l'espace représenté en une pluralité de cellules ; et
l'addition des attributs pour les marqueurs dans chaque cellule pour fournir un attribut total pour chaque cellule ;
dans lequel chaque étape parmi la représentation, le calcul, la division et l'addition est réalisée à l'aide d'un ou de plusieurs processeurs.

2. Procédé (20) selon la revendication 1, comprenant en outre la division de l'attribut total pour chaque cellule par le volume de cette cellule pour fournir une densité d'attribut de cellule.

3. Procédé (20) selon la revendication 1 ou 2, comprenant en outre :
la représentation d'une erreur d'emplacement correspondant à l'emplacement de chaque événement en augmentant la distribution spatiale des marqueurs, l'augmentation de la distribution spatiale étant représentative de l'erreur d'emplacement ;
l'attribution d'une pondération à chaque marqueur dans la pluralité de marqueurs selon une fonction de probabilité pour l'erreur d'emplacement, la fonction de probabilité fournissant une probabilité que le marqueur soit à l'emplacement réel de l'événement ;
le calcul d'un attribut pondéré à l'aide de la fonction de probabilité ; et
l'addition des attributs pondérés pour tous les marqueurs dans chaque cellule pour fournir un attribut pondéré total pour chaque cellule.

4. Procédé (20) selon la revendication 3, comprenant en outre la division de l'attribut pondéré total pour chaque cellule par le volume de cette cellule pour fournir une densité d'attribut scalaire pondéré par cellule ; et/ou dans lequel le calcul de l'attribut pondéré comprend la multiplication de la pondération attribuée par l'attribut correspondant.

5. Procédé (20) selon la revendication 3 ou 4, dans lequel la fonction de probabilité est une distribution statistique, éventuellement dans lequel la distribution statistique est une distribution gaussienne ;
et/ou dans lequel l'erreur d'emplacement est un nombre d'écarts types de la fonction de probabilité.

6. Procédé (20) selon l'une quelconque revendication précédente, dans lequel les marqueurs sont représentés virtuellement par le processeur.

7. Procédé (20) selon l'une quelconque revendication précédente, dans lequel l'attribut est un moment scalaire ou une zone de rupture.

8. Procédé (20) selon l'une quelconque revendication précédente, dans lequel l'emplacement dérivé de chaque événement est dans une limite extérieure formée par la distribution spatiale des marqueurs correspondant à chaque événement.

9. Procédé (20) selon l'une quelconque revendication précédente, dans lequel la distribution spatiale est sphérique lorsqu'aucune solution de plan de faille ou aucun tenseur de moment n'est fourni ; ou dans lequel les marqueurs sont positionnés sur le plan de faille selon son rayon de source lorsqu'une solution de plan de faille ou un tenseur de moment est disponible.

10. Procédé (20) selon l'une quelconque revendication précédente, dans lequel les marqueurs sont distribués uniformément dans la distribution spatiale.

11. Procédé (20) selon l'une quelconque revendication précédente, dans lequel le volume de roche est représenté par un rayon de source.

12. Procédé (20) selon une quelconque revendication précédente comprenant en outre :
la stimulation d'une formation terrestre à l'aide d'un appareil de stimulation configuré pour générer une pluralité d'événements dans la formation.

13. Support lisible par ordinateur non transitoire comprenant des instructions exécutables par ordinateur pour estimer un paramètre d'un volume souterrain qui, lorsqu'il est exécuté par un ordinateur, met en oeuvre un procédé (20) comprenant :
la réception d'un signal
sismique enregistré de chaque événement dans une pluralité d'événements souterrains, où le signal sismique a été reçu par un récepteur sismique (5) ;
**caractérisé en ce que** le procédé comprend en outre :
la représentation de chaque événement par une pluralité de marqueurs dans un espace représenté, une distribution spatiale des marqueurs représentant un volume de roche dans le volume souterrain influencé par un événement microsismique, où le volume de roche et un emplacement de chaque événement sont dérivés du signal sismique ;
le calcul d'un attribut pour chaque marqueur dans la pluralité de marqueurs, où ledit attribut concerne l'événement auquel le marqueur se rapporte ;
la division de l'espace représenté en une pluralité de cellules ; et
l'addition des attributs pour tous les marqueurs dans chaque cellule pour fournir un attribut total pour chaque cellule.

14. Support lisible par ordinateur non transitoire selon la revendication 13, le procédé (20) comprenant en outre :
la représentation d'une erreur d'emplacement correspondant à l'emplacement de chaque événement en augmentant la distribution spatiale des marqueurs, l'augmentation de la distribution spatiale étant représentative de l'erreur d'emplacement ;
l'attribution d'une pondération à chaque marqueur dans la pluralité de marqueurs selon une fonction de probabilité pour l'erreur d'emplacement, la fonction de probabilité fournissant une probabilité que le marqueur soit à l'emplacement réel de l'événement ;
le calcul d'un attribut pondéré à l'aide de la fonction de probabilité ; et
l'addition des attributs pondérés pour tous les marqueurs dans chaque cellule pour fournir un attribut pondéré total pour chaque cellule.

15. Procédé (20) selon l'une quelconque des revendications 1 à 12, dans lequel le paramètre est un volume d'un réservoir, éventuellement dans lequel le réservoir est un réservoir stimulé ; et/ou dans lequel chaque événement dans la pluralité d'événements souterrains est un événement microsismique.
